# EUROPÄISCHE PATENTSCHRIFT

(11) **EP 1 011 852 B1**
(45) Veröffentlichungstag und Bekanntmachung des Hinweises auf die Patenterteilung: **07.01.2004**
(21) Anmeldenummer: 99928982.0
(22) Anmeldetag: 02.07.1999
(51) Int. Cl.: B01F 5/04, B01D 61/20

(54) **Querstrom-Filtrationsanlage**
Cross-flow filtration device
Dispositif de filtration à écoulement tangentiel

(30) Priorität: 13.07.1998 CH 149398
(43) Veröffentlichungstag der Anmeldung: 28.06.2000
(73) Patentinhaber: Bucher-Guyer AG, 8166 Niederweningen (CH)
(72) Erfinder: HARTMANN, Eduard, CH-5425 Schneisingen (CH)
(86) Internationale Anmeldenummer: PCT/CH1999/000294
(87) Internationale Veröffentlichungsnummer: WO 2000/003794

(56) Entgegenhaltungen:
- EP-A- 0 444 285
- EP-A- 0 504 839
- WO-A-93/18848
- DE-A- 2 432 431
- DE-A- 3 222 173
- DE-C- 898 995
- GB-A- 840 295
- US-A- 5 066 402
- US-A- 5 310 113
- US-A- 5 589 077

## Beschreibung

Die Erfindung betrifft eine Querstrom-Filtrationsanlage.

Bekannte Querstrom-Filtrationsanlagen sind als Mehrpassanlagen ausgeführt, bei welchen mehrere Filtrationsmodule in mehreren parallel gespeisten Filtrationswegen angeordnet sind. Solche Filtrationswege sind als Passen bekannt. Diese Passen werden aus einer Verteilleitung mit den zu filtrierenden Fluiden parallel gespeist. Jedes Filtrationsmodul umfasst seinerseits eine Anzahl von Membranröhrchen, welche Filtrationsmembranen tragen und parallel mit den zu filtrierenden Fluiden beaufschlagt werden.

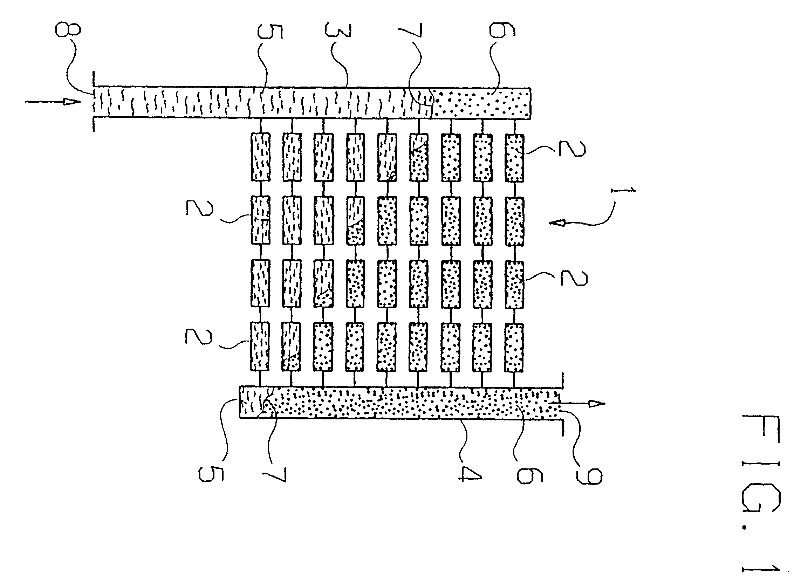

Fig. 1 zeigt ein Schema einer derartigen bekannten Querstrom-Filtrationsanlage. Sie umfasst neun Passen 1, deren jede vier Filtrationsmodule 2 aufweist. In jeder Passe 1 sind die Filtrationsmodule 2 hintereinander geschaltet. Die neun Passen 1 werden durch eine Verteilleitung 3 mit zu filtrierenden Fluiden parallel gespeist. In den Filtrationsmodulen 2 wird ein Teil der Fluide als Permeat oder Filtrat abgeschieden, während der restliche Teil der Fluide als Retentat durch eine Sammelleitung 4 gesammelt und abgeführt wird. Die Abführung des Permeates ist nicht mit dargestellt.

Fig. 1 zeigt in der Verteilleitung 3 zwei Fluide 5 und 6 mit einer Trenngrenze 7. Die Fluide 5 und 6 treten auf, wenn nach Abschluss eines Filtrationszyklus das Retentat 6 mittels Wasser 5 aus der Filtrationsanlage verdrängt wird. Im dargestellten Zustand ist ein Teil der Filtrationsmodule 2 und der Sammelleitung 4 infolge der Verdrängung schon mit Wasser 5 gefüllt, während ein anderer Teil von Modulen 2 und Leitung 4 noch mit Retentat 6 gefüllt ist. Unter diesen Umständen ist es bekannt, dass es immer wieder zu Verstopfungen von einzelnen Membranröhrchen oder von ganzen Filtrationsmodulen 2 kommt, weil das hochviskose Retentat 6 aus den restlichen Modulen 2 nicht mehr verdrängt wird, wenn das Wasser 5 mit geringer Viskosität durch einen Teil von bereits frei gespülten Modulen abfliessen kann.

Betrug der Druckabfall durch die Filtrationsmodule 2 zwischen dem Eingang 8 der Verteilleitung 3 und dem Ausgang 9 der Sammelleitung 4 vor der Zuführung des Wassers 5 z.B. noch 5 bar, so reduziert sich der Druckabfall im in Fig. 1 dargestellten Zustand nach Freispülung des ersten Passes 1 auf etwa 3 bar und fällt mit der Freispülung weiterer Passe 1 weiter ab. Der reduzierte Druckabfall verlangsamt die Fliessgeschwindigkeit in den noch mit Retentat 6 gefüllten Modulen 2. Ein Struktur-Effekt erhöht die hohe Viskosität des Retentates 6 noch weiter bis es zum Fliess-Stillstand kommt. Der verbleibende Druckabfall von weniger als 3 bar reicht dann nicht mehr aus, um das restliche Retentat 6 zu verdrängen.

Bekannte Vorrichtungen haben dieses Problem vermindert durch symmetrische Verteiler und/oder sehr langsam öffnende Wasser-Ventile bei noch offener Retentat-Zuführung. Im ersten Fall erreicht die Trenngrenze 7 alle Passen 1 gleichzeitig, im zweiten Fall vermindert sich die Viskositätsdifferenz der Fluidmischungen, welche die Passen 1 gleichzeitig erreichen.

Aus EP-A1-0 444 285 ist eine Vorrichtung zur Querstrom-Filtration bekannt, bei der mehrere Filtrationsmodule in Serie geschaltet sind. Als dieser Anmeldung vorbekannter Stand der Technik ist auch die Parallelschaltung von Filtrationsmodulen erkennbar. Das vorstehend anhand der Fig. 1 geschilderte Problem ist hieraus nicht erkennbar und entsprechend auch keine Lösung für dieses Problem.

Bekannte symmetrische Verteiler sind aus Platz- und Kostengründen nur für maximal vier Passe ausgelegt und meistens mit statischen Mischern kombiniert. Langsam öffnende Wasser-Ventile erfordern Regeleinrichtungen, um eine ausreichend langsame Vikositätsverminderung des Retentates zu erreichen. Dennoch verbleibende tote Strömungszonen können aber auch in diesem Fall wieder Verstopfungen verursachen.

Die Praxis zeigt, dass trotz der beschriebenen bekannten Massnahmen Modulverstopfungen nicht vermieden werden. Problematisch ist die Situation vor allem bei Filtrationsanlagen mit Verteilern für bis zu 200 Membranröhren, was etwa einer Standard-Grossanlage mit 10 Passen entspricht.

Der Erfindung liegt deshalb die Aufgabe zugrunde, einen vermischten Zustand von mindestens zwei Fluiden in einer Leitung herbeizuführen, welcher es erlaubt, Modulverstopfungen der beschriebenen Art wirkungsvoll zu verhindern.

Gemäss der Erfindung wird die Lösung dieser Aufgabe bei einem Verfahren der eingangs genannten Art dadurch erreicht, dass an mindestens einer Stelle des zweiten Teiles der Leitung dieser ein Teilstrom entnommen wird und dass dieser Teilstrom mit einer zeitlichen Verzögerung dem zweiten Teil der Leitung wieder zugeführt wird.

Das Verfahren wird vorzugsweise so ausgeführt, dass der Teilstrom dem zweiten Teil der Leitung an der Entnahmestelle oder an einer stromaufwärts von dieser gelegenen Stelle wieder zugeführt wird.

Als Vorrichtung zur Vermischung von Fluiden in einer Leitung dient vorzugsweise mindestens eine Nebenleitung, welche mindestens zwei voneinander in Leitungsrichtung beabstandete Leitungsstellen der Leitung miteinander verbindet und einen Teilstrom aus der stromab liegenden Leitungsstelle zu mindestens einer der stromauf liegenden Leitungsstellen in einem Kreislauf rückführt.

Eine Anwendung des Verfahrens zur Vermischung von Fluiden zur Vermeidung von Modulverstopfungen in einer Querstrom-Filtrationsanlage, in welcher mindestens zwei, die Module umfassende Filtrationswege (Passe) parallel aus einer Verteilleitung mit den zu filtrierenden Fluiden gespeist werden, zeichnet sich dadurch, dass der zweite Teil der Leitung als Verteilleitung für die Passe verwendet wird.

Weitere Varianten des Verfahrens, sowie dessen Anwendung und der Vorrichtung zu dessen Durchführung sind in den Patentansprüchen gekennzeichnet.

Ausführungsbeispiele der Erfindung sind in der folgenden Beschreibung und den Figuren der Zeichnung näher erläutert.
Es zeigen:
Fig. 1 ein Schema einer bekannten Querstrom-Filtrationsanlage,
Fig. 2 eine erfindungsgemässe Vorrichtung zur Vermischung von Fluiden in einer Leitung,
Fig. 3a eine Variante der Vorrichtung gemäss Fig. 2 mit einem Injektor,
Fig. 3b eine Variante der Vorrichtung gemäss Fig. 2 mit einem Radialmischer,
Fig. 3c eine Variante der Vorrichtung gemäss Fig. 2 mit einer Leitung zur Verteilung der vermischten Fluide,
Fig. 3d eine Variante der Vorrichtung gemäss Fig. 2, bei der ein Teilstrom aus einer Leitung an zwei Stellen der Leitung wieder zugeführt wird,
Fig. 3e eine Variante der Vorrichtung gemäss Fig. 3d mit einer Leitung zur Verteilung der vermischten Fluide,
Fig. 4 ein Schema einer Querstrom-Filtrationsanlage, bei welcher das erfindungsgemässe Verfahren zur Vermischung von Fluiden angewendet ist,
Fig. 5 eine Variante der Filtrationsanlage gemäss Fig. 4 mit einer Vorrichtung zur Unterbrechung eines rückgeführten Teilstromes,
Fig. 6 eine Variante der Filtrationsanlage gemäss Fig. 4 mit einer Rückführung stromab von einer Retentatpumpe,
Fig. 7 eine Variante der Filtrationsanlage gemäss Fig. 4 mit einer Rückführung über einen Batch-Tank,
Fig. 8 eine Variante der Filtrationsanlage gemäss Fig. 4 mit einer Rückführung über eine Retentatleitung,
Fig. 9 ein Detail einer Variante der Filtrationsanlage gemäss Fig. 4 mit einer Rückführung über einen Injektor,
Fig. 10 ein Detail einer anderen Variante der Filtrationsanlage gemäss Fig. 4 mit einem vertikal liegenden Verteiler und einer Rückführung über einen Injektor,
Fig. 11 eine Variante der Filtrationsanlage gemäss Fig. 4 mit einer Rückführung stromauf von einer Retentatpumpe,
Fig. 12 ein Detail einer Variante der Filtrationsanlage gemäss Fig. 4 mit einer in einem Bauelement integrierten Nebenleitung und Verteilleitung, und
Fig. 13 ein Detail einer Variante der Filtrationsanlage gemäss Fig. 4 mit je einem Kreislauf für die Verteilleitung und die Sammelleitung.

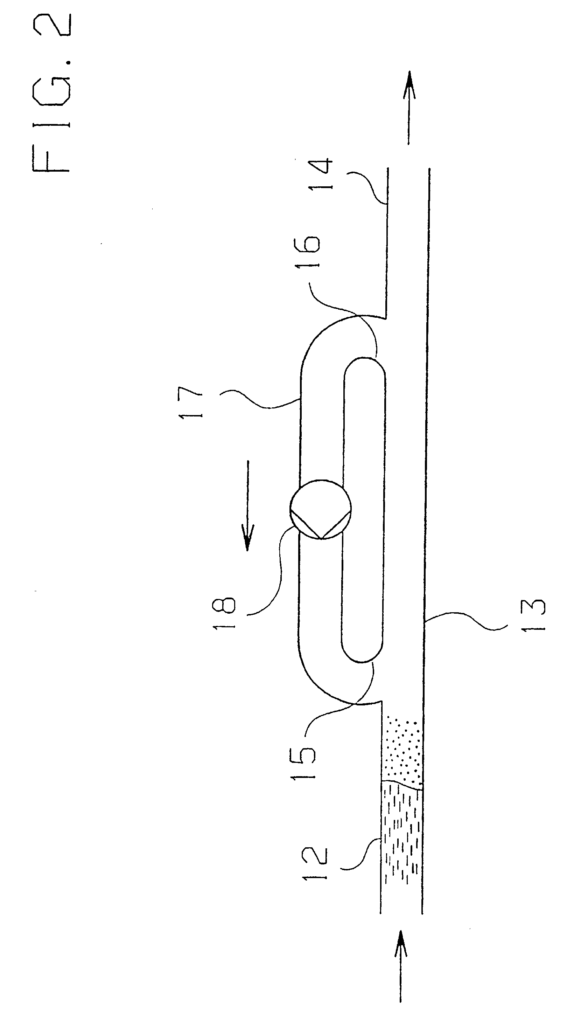

Fig. 2 zeigt eine Vorrichtung zur Vermischung von Fluiden in einer Leitung 13. Die Fluide werden der Leitung 13 über eine Leitung 12 unvermischt zugeführt und von der Leitung 13 über eine Leitung 14 vermischt abgeführt. Zwei voneinander in Längsrichtung beabstandete Leitungsstellen 15, 16 der Leitung 13 sind durch eine Nebenleitung 17 miteinander verbunden. Durch eine Pumpe 18 in der Nebenleitung 17 wird ein Teilstrom aus der stromab liegenden Leitungsstelle 16 zu der stromauf liegenden Leitungsstelle 15 in einem Kreislauf rückgeführt.

Die Mischwirkung tritt bei der Vorrichtung gemäss Fig. 2 ein, wenn mehrere Fluide in einem Querschnitt der Leitung 12 nebeneinander vorliegen. Die Wirkung tritt aber insbesondere auch ein, wenn in der Leitung 12 mehrere Fluide in Längsrichtung aufeinander folgen. Infolge der Rückführung eines Teilstromes durch die Nebenleitung 17 wird ein erstes Fluid in ein auf eine Trenngrenze nachfolgendes zweites Fluid solange eingemischt, bis das zweite Fluid das erste Fluid ganz aus der Nebenleitung 17 verdrängt hat. Die Konzentration des zweiten Fluids wird also nachfolgend auf die Trenngrenze nur langsam ansteigen über eine Länge, welche vom Abstand der Leitungsstellen 15, 16 abhängt. Nur innerhalb dieser Länge wird mit der Vorrichtung gemäss Fig. 2 die Vermischung erreicht.

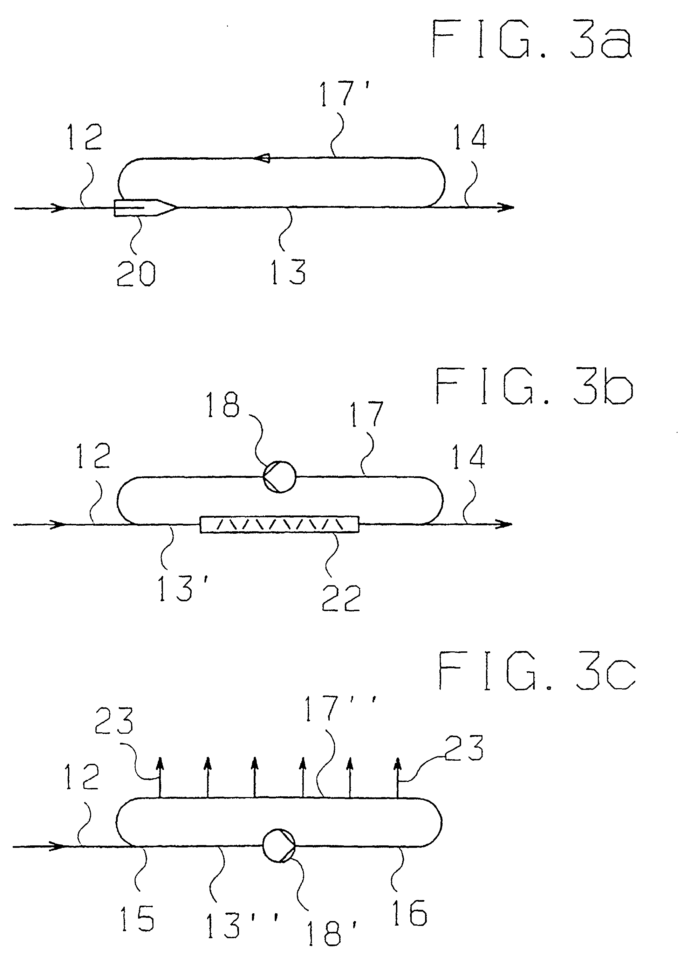

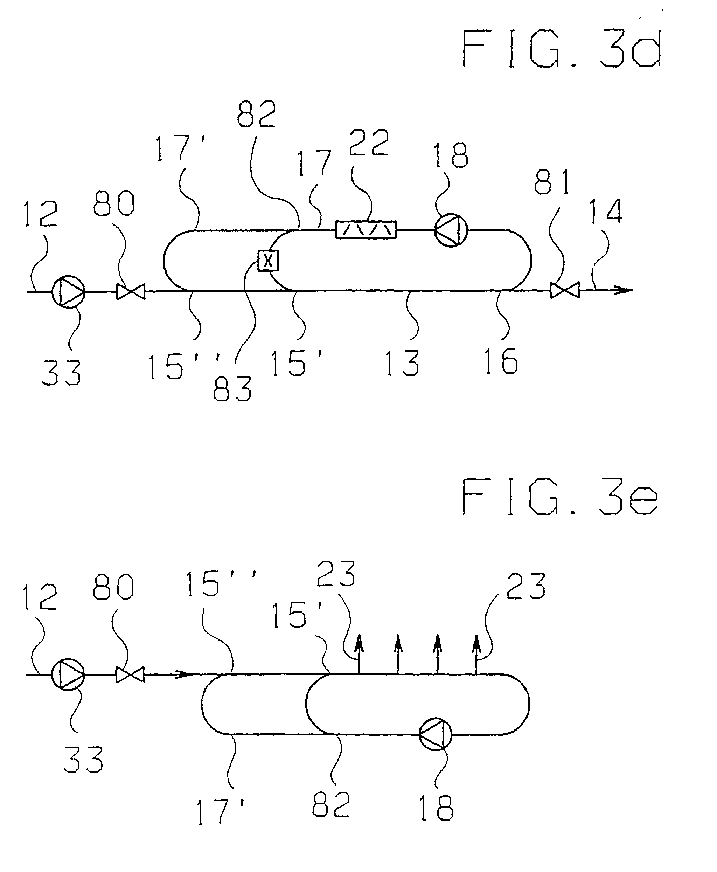

In Fig. 3a, welche eine Variante der Vorrichtung gemäss Fig. 2 zeigt, bezeichnen Bezugszeichen aus Fig. 2 entsprechende Bauelemente. Anstelle der Pumpe 18 ist gemäss Fig. 3a an der stromauf liegenden Leitungsstelle ein Injektor 20 vorgesehen, welcher den Teilstrom aus der stromab liegenden Leitungsstelle über die Nebenleitung 17' in die stromauf liegende Leitungsstelle einsaugt. Solche Injektoren sind in verschiedenen Bauarten an sich bekannt, z.B. mit einem Leitblech oder als Spaltinjektor.

In Fig. 3b, welche eine der Fig. 2 entsprechende Vorrichtung zeigt, ist in die Leitung 13' zur Vermischung noch ein Radialmischer 22 eingefügt. Der Radialmischer 22 verbessert die Vermischung des Teilstromes von der Nebenleitung 17 quer zur Achse der Leitung 13'.

Fig. 3c zeigt eine Variante der Vorrichtung gemäss Fig. 2, bei der der stromauf liegenden Leitungsstelle 15 der Leitung 13'' zur Vermischung ein Teilstrom über eine Nebenleitung 17'' zugeführt wird, welche erfindungsgemäß sechs Teilabgänge 23 zur Abführung der vermischten Fluide zu den einzelnen parallelen Filtrationsmodulen aufweist. Demnach fehlt hier die Leitung 14 zur Abführung gemäss Fig. 2, und der Nebenleitung 17'' ist der gesamte, die stromab liegende Leitungsstelle 16 erreichende Leitungsstrom als Teilstrom zugeführt. Bei der Variante gemäss Fig. 3c ist zur wirkungsvollen Rückführung des Leitungsstromes über die Nebenleitung 17'' in die Leitung 13'' noch eine Umwälzpumpe 18' eingefügt.

Bei der in Fig. 3d schematisch gezeigten Variante der Vorrichtung gemäss Fig. 2 wird durch eine, von der Zuführung der Fluide über die Leitung 12 unabhängige Betriebsart ermöglicht, von einem ersten Fluid in der Abführleitung 14 ohne allmählichen Übergang direkt auf einen vermischten Zustand überzugehen. Dies wird erreicht, indem von der stromab liegenden Leitungsstelle 16 über eine erste Nebenleitung 17 ein Teilstrom einer ersten stromauf liegenden Leitungsstelle 15' zugeführt wird, und über eine zweite Nebenleitung 17' einer zweiten stromauf liegenden Leitungsstelle 15''. Sobald nun eine Trenngrenze zwischen zwei Fluiden aus der Leitung 12 in den Bereich zwischen den Leitungsstellen 15'' und 16 eingewandert ist, erfolgt mit diesem Vormischer folgender Verfahrensablauf:
- zwei Ventile 80 und 81 vor dem Eingang und nach dem Ausgang der Misch-Leitung 13 werden geschlossen,
- die Umwälzpumpe 18 in der Nebenleitung 17 wird eingeschaltet,
- durch die Zirkulation im Kreis der Leitungen 13, 17, 17' mit unterschiedlichen zeitlichen Verzögerungen erfolgt eine Mischung längs der Misch-Leitung 13. Durch den Radialmischer 22 erfolgt gleichzeitig auch eine Quer-Mischung,
- die Ventile 80 und 81 werden geöffnet,
- eine Förderpumpe 33 in der Zuführleitung 12 wird dazugeschaltet, um das entstandene Gemisch der Fluide über die Abführleitung 14 abzuführen.

Ein Teiler 82 zwischen den Nebenleitungen 17, 17' teilt also via Leitung 17 eintreffende Inhomogenitäten auf eine Distanz Δℓ zwischen den Leitungsstellen 15', 15'' auf. Mit Vorteil ist die Leitungslänge b zwischen dem Teiler 82 und der Leitungsstelle 15' via 17', 15'' ungleich der Leitungslänge a zwischen dem Teiler 82 und der Leitungsstelle 15'. Vorzugsweise ist b = (n + 1/2) a, wobei n = natürliche Zahl. Zur Kompensation der unterschiedlichen Leitungslängen a und b ist zwischen Teiler 82 und Leitungsstelle 15' eine Drossel 83 vorgesehen, mit der die Durchflüsse Qa durch die Drossel 83 und Qb via Leitungsstelle 15'' einander etwa angeglichen werden, Qa ≈ Qb.

Fig. 3e zeigt eine Variante der Vorrichtung gemäss Fig. 3d mit einer Leitung zur Verteilung der vermischten Fluide über vier Teilabgänge 23. Bei einer ersten Betriebsart, solange das Eingangsventil 80 geschlossen ist, fliesst infolge der Umwälzpumpe 18 nur ein Strom Q82 im Kreislauf über den Teiler 82 und nicht über die Teilausgänge 23, die Vorrichtung ist als reiner Vormischer wirksam. Bei einer zweiten Betriebsart mit offenem Eingangsventil 80 wird der Strom Q80 durch das Eingangsventil 80 vorzugsweise zu Q82 ≈ 1/2 Q80 eingestellt.

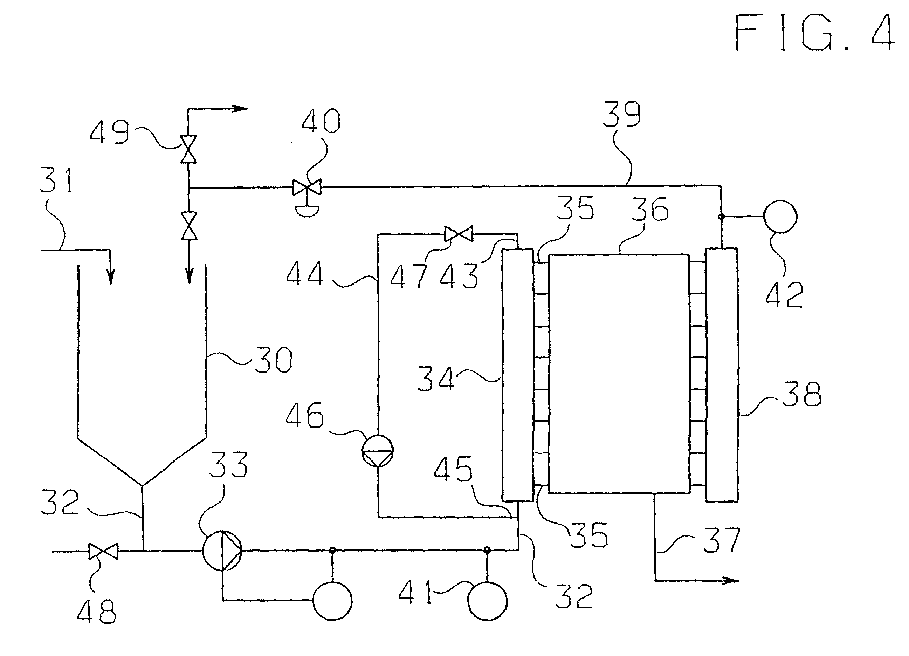

Fig. 4 zeigt ein Schema einer Querstrom-Filtrationsanlage, bei der eine Vorrichtung zur Vermischung von Fluiden angewendet ist. Die Anlage umfasst in an sich bekannter Art einen Behälter 30 für zu filtrierende Medien, welche über eine Leitung 31 zugeführt werden. Unten an einen Ausgang des Behälters 30 angeschlossen ist eine Förderleitung 32 für dessen Inhalt, in welche eine.Förderpumpe 33 eingeschaltet ist. Die Pumpe 33 erzeugt einen Ausgangsdruck von Δp = 6 bar und einen Förderstrom Q1. Die Förderleitung 32 ist an eine Verteilleitung 34 angeschlossen, welche die zu filtrierenden Medien auf parallele Filtrationswege mittels Teilabgängen 35 verteilt. Die Teilabgänge 35 führen über eine Filtereinheit 36, welche ein Filtrat oder Permeat über eine Leitung 37 abscheidet, auf eine Sammelleitung 38.

Die Sammelleitung 38 leitet einen nicht über die Leitung 37 abgeschiedenen Teil der zu filtrierenden Medien als Retentat über eine Retentatleitung 39 und ein Drosselelement 40 in den Behälter 30 zurück. Mit dem Drosselelement 40 lässt sich der Druckabfall zwischen dem Eingang 45 der Verteilleitung 34 und dem Ausgang der Sammelleitung 38 einstellen. Dieser Druckabfall kann durch eine Drucksonde 41 für den Eingangsdruck p1 und eine Drucksonde 42 für den Ausgangsdruck p2 gemessen werden.

An einem Ende 43 der Verteilleitung 34 ist eine Nebenleitung 44 angeschlossen, welche einen Teilstrom vom Ende 43 zum Eingang 45 der Verteilleitung 34 rückführt. Erreichen über die Förderleitung 32 getrennte Anteile der zu filtrierenden Medien den Eingang 45 der Verteilleitung 34 nacheinander, so werden sie den Teilabgängen 35 vermischt zugeführt und die gemäss Fig. 1 beschriebenen Probleme treten nicht auf. In die Nebenleitung 44 eingeschaltet ist, wie Fig. 4 zeigt, eine zweite Förderpumpe 46 und ein Drosselelement 47. Die Pumpe 46 erzeugt einen Ausgangsdruck von Δp = 0,2 bar und einen Förderstrom, welcher 50% bis 100% des Stromes Q1 der ersten Pumpe 33 beträgt.

Infolgedessen ergibt sich in der Verteilleitung 34 ein Strom, welcher 150% bis 200% des Stromes Q1 beträgt. Dadurch erreichen allenfalls noch verbleibende Konzentrations-Differenzen der zu filtrierenden Medien alle Teilabgänge 35 mit geringer Zeitverschiebung und können sich an einzelne Teilabgängen 35 nie lange auswirken. Solche Konzentrations-Differenzen entstehen insbesondere dann, wenn nach Abschluss eines Filtrationszyklus über ein Ventil 48 am Behälter 30 Spülwasser zur Verdrängung von hochviskosen Retentat-Resten über ein Auslassventil 49 zugeführt wird.

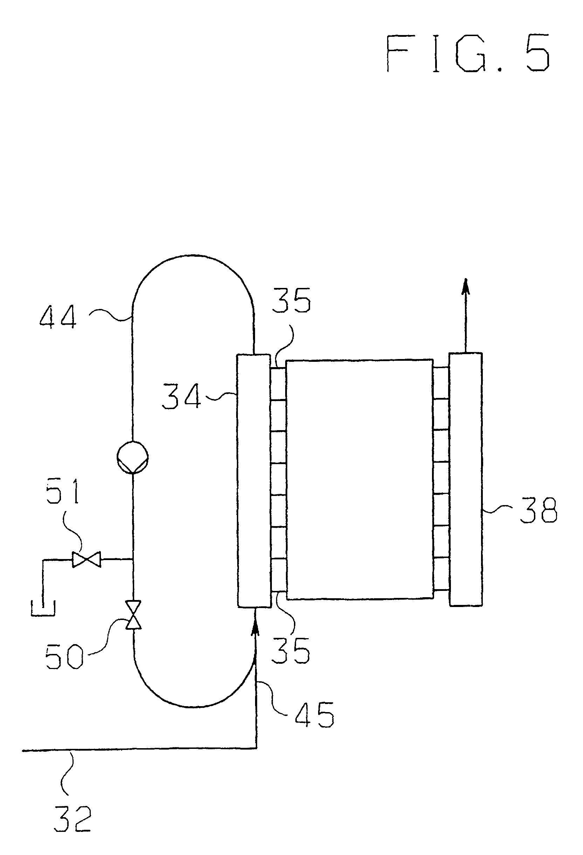

Fig. 5 zeigt eine Variante eines Details der Filtrationsanlage gemäss Fig. 4. Schematisch dargestellt ist in Fig. 5 die Verteilleitung 34 mit den Teilabgängen 35, der Sammelleitung 38 und der Nebenleitung 44. Als Vorrichtung zur Unterbrechung des rückgeführten Teilstromes weist die Nebenleitung 44 gemäss Fig. 5 an ihrem unteren Ende vor dem Eingang 45 der Verteilleitung 34 ein Sperrventil 50 und diesem vorgeschaltet ein Ablassventil 51 auf. Die Ventile 50, 51 werden für eine endgültige Freispülung der Leitungen 34, 44 mit Wasser oder einer Lauge als Spülmittel bei Reinigung verwendet. Dabei wird Retentat ausgespült, welches gemäss Fig. 4 während eines Filtrationszyklus in dem Retentatkreislauf 30, 32, 34, 36, 38, 39 zirkuliert hat.

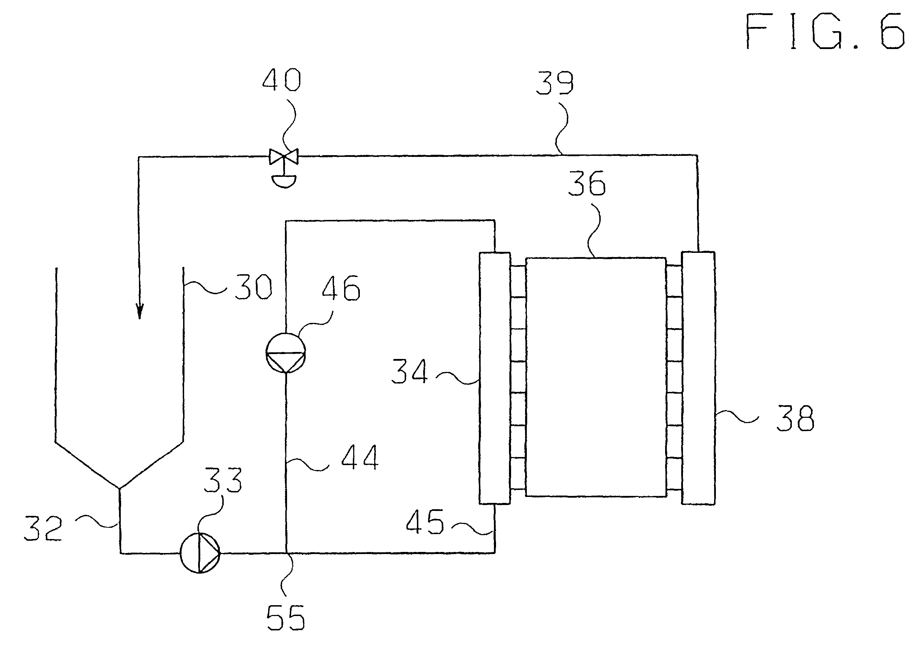

Fig. 6 zeigt ein Schema einer Variante der Filtrationsanlage gemäss Fig. 4. Die Rückführung des Teilstromes aus der Verteilleitung 34 erfolgt hier an einer Stelle 55 unmittelbar stromab (druckseitig) von der Retentat-Förderpumpe 33, im Gegensatz zu dem Eingang 45 der Verteilleitung 34 gemäss Fig. 4. Der Vorteil eines derartigen Vorkreislaufes liegt in einer besseren Längsdurchmischung in der Leitung zwischen den Stellen 45, 55, da der Weg zwischen diesen Stellen bei praktisch ausgeführten Anlagen relativ lang ist und mehrere Krümmer aufweist.

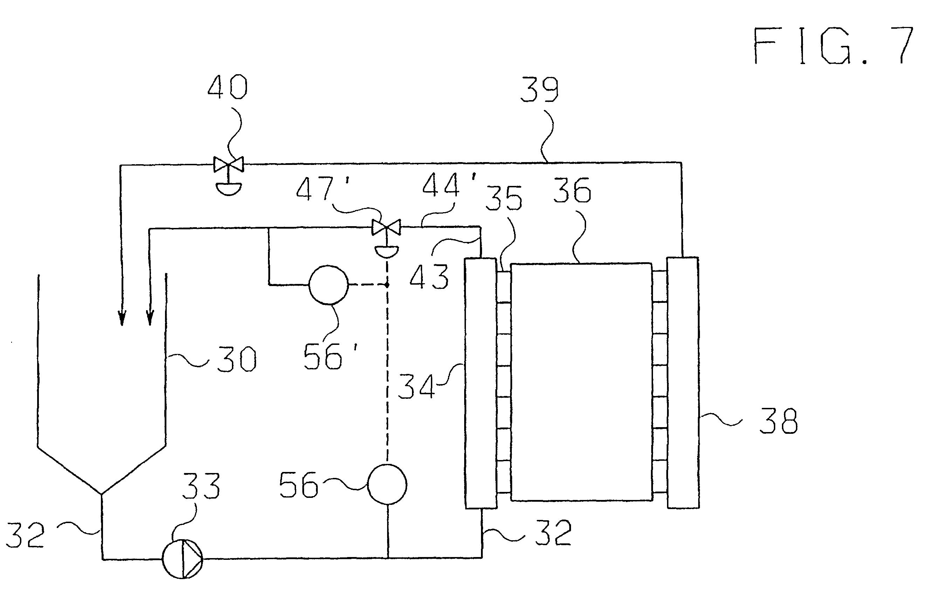

Bei einer weiteren Variante der Filtrationsanlage gemäss Fig. 4 zeigt Fig. 7 schematisch eine Rückführung des Teilstromes vom Ende 43 der Verteilleitung 34 über eine Leitung 44' und den Batch-Tank 30. Dabei wird die zweite Förderpumpe 46 gemäss Fig. 4 eingespart. In die Leitung 44' ist hierbei ein Durchflussregelventil 47' oder eine fest eingestellte Blende eingesetzt derart, dass ca. 50 % des über die Förderleitung 32 zugeführten Retentatstromes direkt in den Batch-Tank 30 zurückgeführt wird. Diese Variante hat den Vorteil, dass die zweite Förderpumpe 46 gemäss Fig. 4 eingespart wird. Allerdings ist der Energieverbrauch grösser, da ca. 50 % der Energie des Förderstromes aus der Leitung 32 mit etwa 6 bar nicht für die Filtration in der Filtereinheit 36 (Fig. 4) genutzt werden. Das Durchflussregelventil 47' wird über zwei Sensoren 56, 56' für den Durchfluss gesteuert.

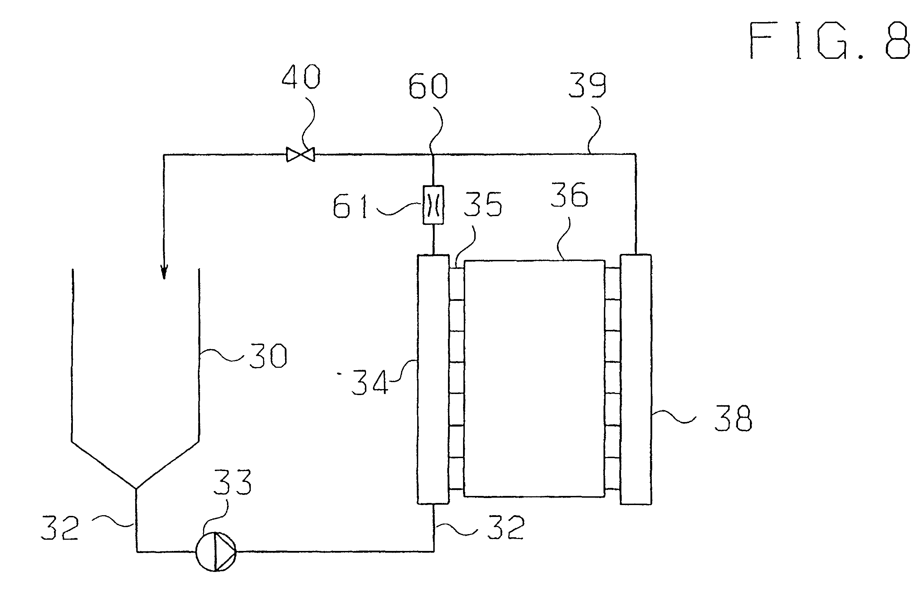

Fig. 8 zeigt eine Variante der Filtrationsanlage gemäss Fig. 4, welche ebenfalls ohne zweite Förderpumpe 46 gemäss Fig. 4 arbeitet. Die Rückführung der zu filtrierenden Medien aus der Verteilleitung 34 erfolgt in diesem Fall durch Einspeisung an einer Stelle 60 in die Retentatleitung 39 aus der Sammelleitung 38. Zwischen der Verteilleitung 34 und der Stelle 60 ist noch eine Drossel 61 zur Druckanpassung eingefügt. Auch hier entsteht eine zusätzliche Belastung der Förderpumpe 33 durch den Strom durch die Drossel 61, welche zwar etwas geringer als bei der Variante gemäss Fig. 7, aber immer noch relativ hoch ist.

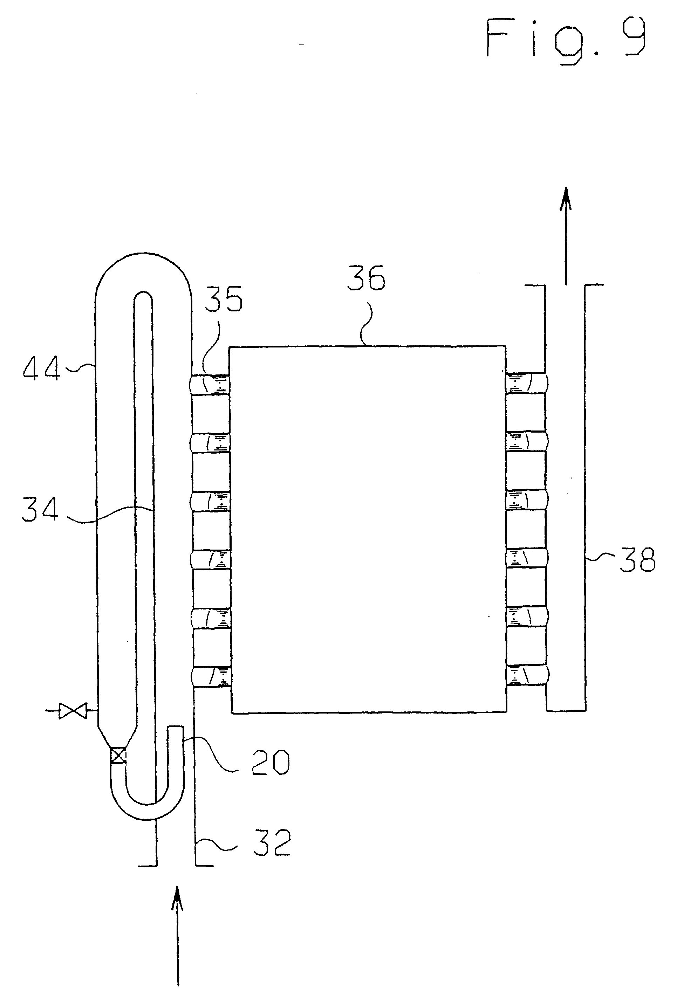

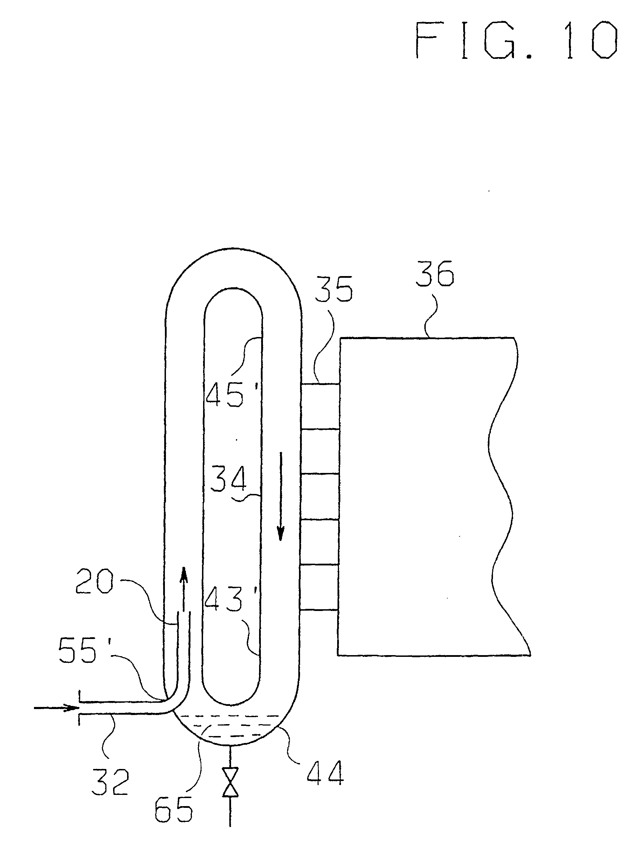

Fig. 9 zeigt ähnlich Fig. 3a ein Detail einer Variante der Filtrationsanlage gemäss Fig. 4 mit einer Rückführung über einen Injektor 20. Förderleitung 32, Verteilleitung 34, Nebenleitung 44, Teilabgänge 35 und Sammelleitung 38 sind wie in Fig. 4 bezeichnet. Die Verteilleitung 34 und die Sammelleitung 38 liegen für eine gleichmässige Verteilung von Trubablagerungen bei Produktionsunterbrüchen der Anlage vorteilhaft horizontal. Ist nur eine vertikale Anordnung möglich, so wird diese mit Vorteil gemäss Fig. 10 gewählt.

Auch eine weitere Variante der Filtrationsanlage gemäss Fig. 4, von der Fig. 10 ein Detail zeigt, arbeitet mit einer Rückführung über einen Injektor 20. Im Gegensatz zur Variante gemäss Fig. 4 ist aber hier die Stelle 55', an der das Retentat mit der Nebenleitung 44 vom Ende 43' der Verteilleitung 34 in die Förderleitung 32 rückgeführt wird, dem Eingang 45' der Leitung 34 möglichst weit vorgelagert. Trubablagerungen 65, welche bei Betriebsunterbrüchen der Filtrationsanlage in der Nebenleitung 44 entstehen können, werden so besser wieder eingemischt, wenn die Nebenleitung 44 unten liegt und die Verteilleitung 34 von oben nach unten durchströmt wird. Ausserdem ist die Anströmung der Teilabgänge 35 gleichmässiger als bei der Variante gemäss Fig. 5.

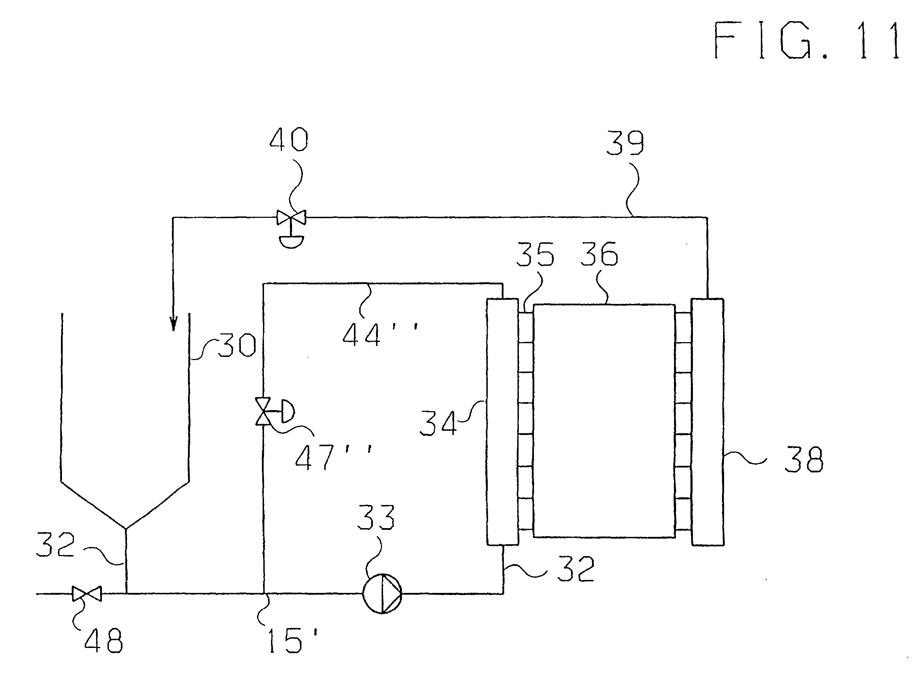

Eine Variante der Filtrationsanlage gemäss Fig. 4 mit einer Rückführung eines Teilstromes der zu filtrierenden Medien über eine Nebenleitung 44'' in die Förderleitung 32 an einer Stelle 15' stromauf von der Retentatpumpe 33 ist in Fig. 11 schematisch gezeigt. Zur Anpassung des Druckes ist hierbei ein Drosselventil 47'' in die Nebenleitung 44'' eingefügt. Diese Variante der Filtrationsanlage bietet eine besonders gute Längsdurchmischung bei Feststoffablagerungen, z.B. von Aktivkohle, Bentonit: etc. nach Betriebsunterbrüchen.

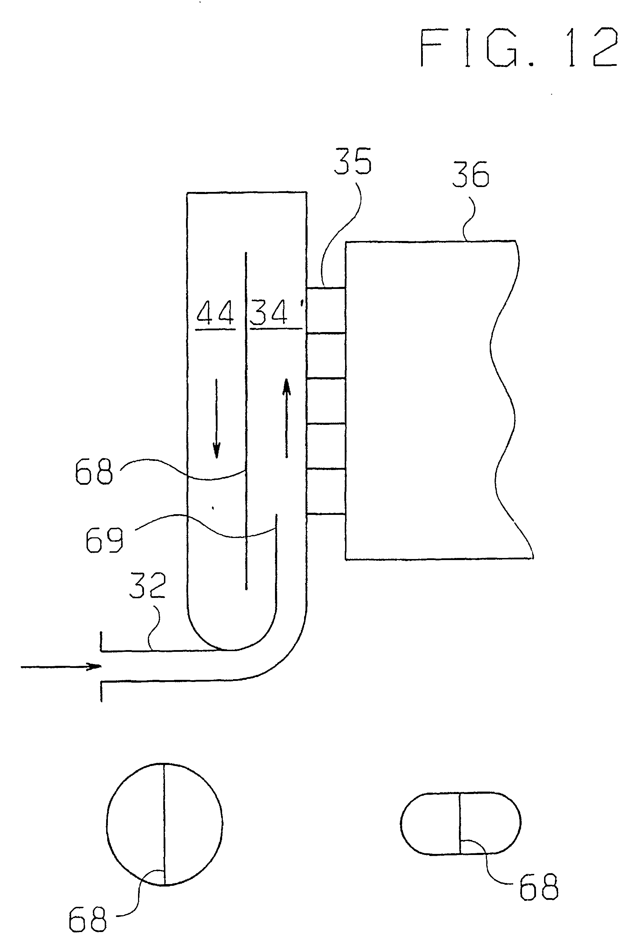

Fig. 12 zeigt ein Detail einer Variante der Filtrationsanlage gemäss Fig. 4 mit einer in einem Bauelement integrierten Nebenleitung 44 und Verteilleitung 34'. Diese Leitungen 44, 34' lassen sich realisieren, indem man in eine Leitung mit kreisrundem, ovalem oder rechteckigem Querschnitt eine Trennwand 68 einbaut. Ein Ende 69 der Förderleitung 32 lässt sich dabei mit Vorteil als Injektor gestalten, welcher den Strom aus der Nebenleitung 44 wieder in die Verteilleitung 34' zurückführt.

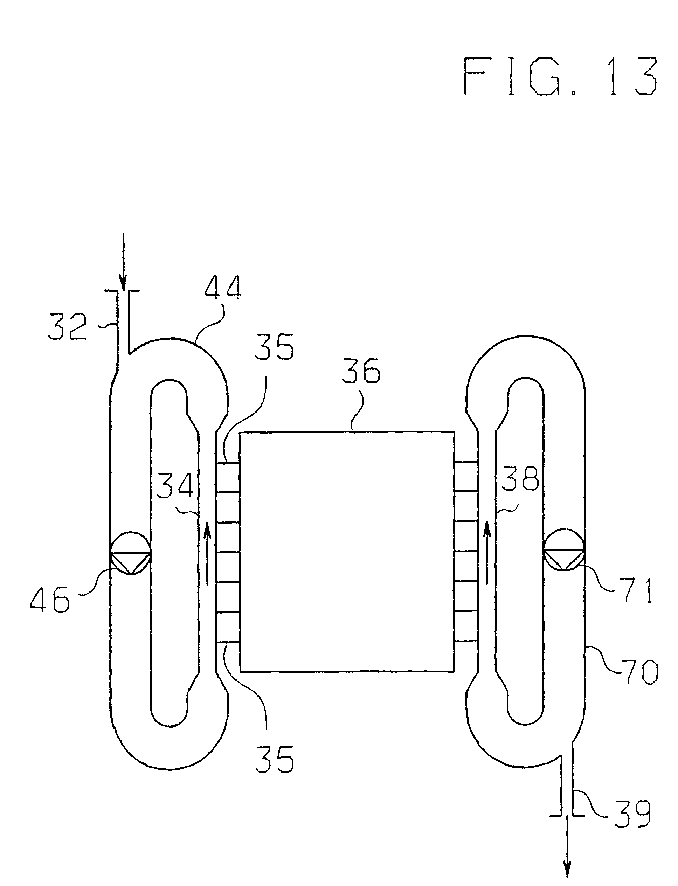

Ein Detail einer Variante der Filtrationsanlage gemäss Fig. 4 zur Angleichung des Druckabfalles über die einzelnen Teilabgänge 35 zeigt schematisch Fig. 13. Hierbei ist zusätzlich zu dem Vorkreislauf 44, 46 für die Verteilleitung 34 auch die Sammelleitung 38 mit einem Nachkreislauf 70 versehen. Die Förderpumpe 46 im Vorkreislauf und eine Förderpumpe 71 im Nachkreislauf sorgen dafür, dass in beiden Kreisläufen, wie Fig. 13 zeigt, die unten liegenden Passen zuerst und die oben liegenden Passen zuletzt von den Strömungen erreicht werden. Durch passende Dimensionierung der Förderpumpen 46, 71 und der Leitungen 34, 44, 38, 70 wird erreicht, dass der Druckabfall Δp über jeden einzelnen der Teilabgänge 35 gleich und annähernd konstant ist. Ausserdem sind die Querschnitte der Leitungen 34, 38, wie Fig. 13 zeigt, innerhalb jedes Kreislaufes verkleinert, damit Inhomogenitäten der zu filtrierenden Medien infolge der grösseren Strömungsgeschwindigkeiten die einzelnen Teilabgänge 35 mit möglichst geringer Zeit verzögerung erreichen.

Für den Fachmann ergibt sich eine Vielzahl von Varianten bei der Anwendung des Verfahrens und der Vorrichtung zur Vermischung von Fluiden in einer Leitung, welche alle den Rahmen der beigefügten Patentansprüche nicht verlassen. Die Vorrichtungen eignen sich für alle Bereiche der Querstromfiltration und alle Arten von Membranen, wie Hohlfasern, Kapillaren, Wickelmodule, Rohrmodule, organische und anorganische Membranen im Trennbereich RO, NF, UF, MF und Siebfiltration. Die zu vermischenden Fluide umfassen anorganische und organische zu trennende Produkte mit oder ohne Feststoffanteile. Filtrationsanlagen, welche diese Vorrichtungen umfassen, können diskontinuierlich oder kontinuierlich arbeiten.

Die Verteilleitungen 34, vgl. Fig. 4, sind je nach Art der Produkte mit Vorteil horizontal oder vertikal angeordnet. Ein Betrieb der Vorkreisläufe 44, 46 zur Rückführung der Teilströme während der gesamten Laufzeit der Anlagen bringt eine erhöhte Sicherheit bei Viskositätsschwankungen der Produkte. Ein Betrieb nur unmittelbar vor und während einer Produktverdrängung aus der Anlage bringt eine, allerdings relativ geringe Energieeinsparung. Anstelle der zu Fig. 4 beschriebenen Teilabgänge 35 eignen sich für diese Filtrationswege auch einzelne Membranrohre, deren Anzahl entsprechend der Anzahl der Teilabgänge 35 bis ca. 200 betragen kann.

Während übliche Filtrationsmodule der zu Fig. 1 beschriebenen Art etwa 20 Filtrationsrohre umfassen, sind auch schon Grossmodule mit bis zu ca. 200 Membranrohren bekannt. Eine Anlage umfasst oft nur ein einziges derartiges Grossmodul, in welches sich dann die Sammel- und Verteilleitung nebst Vorkreislauf gemäss Fig. 4 zu einer erweiterten Moduleinheit integrieren lassen.

## Patentansprüche

1. Querstrom-Filtrationsanlage mit einer Vielzahl parallel geschalteter Filtrationsmodule, bei der das zu filtrierende Stoffgemisch den Filtrationsmodulen mittels einer Pumpe zuführbar ist, **dadurch gekennzeichnet, dass** eingangsseitig den parallel geschalteten Filtrationsmodulen eine Vorrichtung (13, 17, 18; 34, 44, 46) zur Vermischung von zwei Fluiden unterschiedlicher Viskosität vorgeschaltet ist, von der Teilausgänge (23; 35) zu den einzelnen parallel geschalteten Filtrationsmodulen führen, wobei die Filtrationsmodule parallel an eine Verteilleitung (3; 34) angeschlossen sind und aus dieser Verteilleitung (3; 34) ein Teilstrom des zu filtrierenden Stoffgemischs entnehmbar ist, der mit einer zeitlichen Verzögerung der Verteilleitung (3; 34) wieder zuführbar ist. neue Patentansprüche

2. Querstrom-Filtrationsanlage nach Anspruch 1, **dadurch gekennzeichnet, dass** die Vorrichtung zur Vermischung von zwei Fluiden besteht aus einer Leitung (13; 34) mit beabstandeten Leitungsstellen (15, 16), wobei die Leitungsstellen (15, 16) durch eine Nebenleitung (17; 44) verbunden ist, durch die ein Teilstrom aus der stromab liegenden Leitungsstelle (16) zu der stromauf liegenden Leitungsstelle (15) in einem Kreislauf rückführbar ist.

3. Querstrom-Filtrationsanlage nach Anspruch 2, **dadurch gekennzeichnet, dass** in der Nebenleitung (17; 44) eine den Teilstrom fördernde Pumpe (18; 46) angeordnet ist.

4. Querstrom-Filtrationsanlage nach Anspruch 2, **dadurch gekennzeichnet, dass** an der stromauf liegenden Leitungsstelle (15) ein Injektor (20) angeordnet ist, welcher den Teilstrom aus der Nebenleitung (17') in die Leitung (13) einsaugt.

5. Querstrom-Filtrationsanlage nach einem der Ansprüche 1 bis 4, **dadurch gekennzeichnet, dass** in der Leitung (13') ein Radialmischer (22) angeordnet ist.

6. Querstrom-Filtrationsanlage nach Anspruch 1, **dadurch gekennzeichnet, dass** die Vorrichtung zur Vermischung von zwei Fluiden besteht aus einer Leitung (13'') und einer Nebenleitung (17''), die an der stromauf liegenden Leitungsstelle (15) einmündet, dass aus der Nebenleitung (17'') Teilabgänge (23) zur Abführung des vermischten Fluids abwzeigen und dass in der Leitung (13'') eine Umwälzpumpe (18') angeordnet ist.

7. Querstrom-Filtrationsanlage nach Anspruch 3, **dadurch gekennzeichnet, dass** in der Nebenleitung (17), die an einer ersten stromauf liegenden Leitungsstelle (15') in die Leitung (13) einmündet, ein Radialmischer (22) angeordnet ist, dass von der Nebenleitung (17') an einem Teiler (82) eine zweite Nebenleitung (17') abzweigt, die an einer zweiten stromauf liegenden Leistungsstelle (15") in die Leitung (13) einmündet, dass in der Leitung zwischen dem Teiler (82) und der ersten stromauf liegenden Leitungsstelle (15') eine Drossel (83) angeordnet ist, dass in der Zuführleitung (12) eine Förderpumpe (33) angeordnet ist, und dass die Zuführleitung (12) und die Abührleitung (14) je durch ein Ventil (80, 81) absperrbar ist.

8. Querstrom-Filtrationsanlage nach Anspruch 3, **dadurch gekennzeichnet, dass** von der Nebenleitung (17') an einem Teiler (82) eine zweite Nebenleitung (17') abzweigt, die an einer zweiten stromauf liegenden Leistungsstelle (15'') in die Leitung (13) einmündet, dass in der Zuführleitung (12) eine Förderpumpe (33) angeordnet ist, dass die Zuführleitung (12) durch ein Ventil (80) absperrbar ist, und dass von der Leitung (13) Teilausgänge (23) zur Abführung des vermischten Fluids abwzeigen.

9. Querstrom-Filtrationsanlage nach einem der Ansprüche 3 bis 8, **dadurch gekennzeichnet, dass** ausgangsseitig an einer Filtereinheit (36) eine die parallelen Filtrationsmodule verbindende Sammelleitung (38) angeschlossen ist.

10. Querstrom-Filtrationsanlage nach Anspruch 10, **dadurch gekennzeichnet, dass** die Sammelleitung (38) mit einem Nachkreislauf (70) verbunden ist, in dem eine Förderpumpe (71) angeordnet ist.

11. Querstrom-Filtrationsanlage nach Anspruch 10, **dadurch gekennzeichnet, dass** die Förderrichtung der Förderpumpe (71) jener der Pumpe (46) entspricht, so dass in beiden Kreisläufen die unten liegenden Filtrationsmodule zuerst und die oben Filtrationsmodule zuletzt von der Strömung erreicht werden.

## Claims

1. Cross-flow filtration plant comprising a plurality of filtration modules arranged in parallel, in which the mixture to be filtered can be supplied to the filtration modules by means of a pump, **characterised in that** a device (13, 17, 18; 34, 44, 46) for mixing two fluids of different viscosity is arranged downstream of the filtration modules arranged in parallel on the inlet side, from which partial outlets (23; 35) lead to the individual filtration modules arranged in parallel, wherein the filtration modules are connected in parallel to a distributor line (3; 34) and a partial flow of the mixture to be filtered can be taken from this distributor line (3; 34) and returned to the distributor line (3; 34) with a time delay.

2. Cross-flow filtration plant according to claim 1, **characterised in that** the device for mixing two fluids consists of a line (13; 34) with points (15, 16) situated at a distance from one another, the points (15, 16) of the line being connected by a by-pass line (17; 44) by means of which a partial flow from the downstream point (16) of the line can be recirculated to the upstream point (15) of the line.

3. Cross-flow filtration plant according to claim 2, **characterised in that** a pump (18; 46) delivering the partial flow is arranged in the by-pass line (17; 44).

4. Cross-flow filtration plant according to claim 2, **characterised in that** an injector (20) which draws the partial flow out of the by-pass line (17') into the line (13) is arranged at the upstream point (15) of the line.

5. Cross-flow filtration plant according to one of claims 1 to 4, **characterised in that** a radial mixer (22) is arranged in the line (13').

6. Cross-flow filtration plant according to claim 1, **characterised in that** the device for mixing two fluids consists of a line (13") and a by-pass line (17") joining at the upstream point (15) of the line, that partial outlets (23) for the discharge of the mixed fluid branch off from the by-pass line (17") and that a circulating pump (18') is arranged in the line (13").

7. Cross-flow filtration plant according to claim 3, **characterised in that** a radial mixer (22) is arranged in the by-pass line (17) joining the line (13) at a first upstream point (15'), that a second by-pass line (17') joining the line (13) at a second upstream point (15") branches off from the by-pass line (17') at a divider (82), that a throttle (83) is arranged in the line between the divider (82) and the first upstream point (15'), that a delivery pump (33) is arranged in the supply line (12) and that the supply line (12) and the discharge line (14) can each be shut off by a valve (80, 81).

8. Cross-flow filtration plant according to claim 3, **characterised in that** a second by-pass line (17') joining the line (13) at a second upstream point (15") branches off from the by-pass line (17') at a divider (82), that a delivery pump (33) is arranged in the supply line (12), that the supply line (12) [and] can be shut off by a valve (80) and that partial outlets (23) for the discharge of the mixed fluid branch off from the line (13).

9. Cross-flow filtration plant according to one of claims 3 to 8, **characterised in that** a collecting line (38) connecting the parallel filtration modules is connected to a filter unit (36) on the outlet side.

10. Cross-flow filtration plant according to claim 10, **characterised in that** the collecting line (38) is connected to a secondary loop (70) in which a delivery pump (71) is arranged.

11. Cross-flow filtration plant according to claim 10, **characterised in that** the delivery direction of the delivery pump (71) corresponds to that of the pump (46) so that the bottom filtration modules are reached first by the flow and the top filtration modules are reached last in both loops.

## Revendications

1. Installation de filtration à écoulement transversal équipée d'un grand nombre de modules de filtration branchés en parallèle et dans laquelle le mélange de matières, devant être filtré, peut être délivré auxdits modules de filtration au moyen d'une pompe, **caractérisée par le fait qu'**un dispositif (13, 17, 18 ; 34, 44, 46) de mélange de deux fluides à viscosités différentes est installé, côté entrée, en amont des modules de filtration branchés en parallèle, dispositif à partir duquel des sorties partielles (23 ; 35) mènent auxdits modules de filtration individuels branchés en parallèle, lesdits modules de filtration étant raccordés en parallèle à un conduit répartiteur (3 ; 34), et un flux partiel du mélange de matières à filtrer, pouvant être prélevé de ce conduit répartiteur (3 ; 34), pouvant être renvoyé audit conduit répartiteur (3 ; 34), avec temporisation.

2. Installation de filtration à écoulement transversal selon la revendication 1, **caractérisée par le fait que** le dispositif, destiné à mélanger deux fluides, comprend un conduit (13 ; 34) muni de zones de canalisation (15, 16) agencées à distance, lesdites zones de canalisation (15, 16) étant reliées par un conduit auxiliaire (17 ; 44) par l'intermédiaire duquel un flux partiel provenant de la zone de canalisation (16) située en aval peut être renvoyé, en parcourant un circuit, à la zone de canalisation (15) située en amont.

3. Installation de filtration à écoulement transversal selon la revendication 2, **caractérisée par le fait qu'**une pompe (18 ; 46), acheminant le flux partiel, est logée dans le conduit auxiliaire (17 ; 44).

4. Installation de filtration à écoulement transversal selon la revendication 2, **caractérisée par le fait qu'**un injecteur (20), placé dans la zone de canalisation (15) située en amont, introduit dans le conduit (13), par aspiration, le flux partiel provenant du conduit auxiliaire (17').

5. Installation de filtration à écoulement transversal selon l'une des revendications 1 à 4, **caractérisée par le fait qu'**un mélangeur radial (22) est disposé dans le conduit (13').

6. Installation de filtration à écoulement transversal selon la revendication 1, **caractérisée par le fait que** le dispositif, destiné à mélanger deux fluides, comprend un conduit (13") et un conduit auxiliaire (17") qui débouche dans la zone de canalisation (15) située en amont ; **par le fait que** des sorties partielles (23) bifurquent du conduit auxiliaire (17"), en vue de l'évacuation du fluide mélangé ; et **par le fait qu'**une pompe (18') de mise en circulation est logée dans le conduit (13").

7. Installation de filtration à écoulement transversal selon la revendication 3, **caractérisée par le fait qu'**un mélangeur radial (22) est disposé dans le conduit auxiliaire (17) débouchant dans le conduit (13) au niveau d'une première zone de canalisation (15') située en amont ; **par le fait qu'**un second conduit auxiliaire (17'), bifurquant du conduit auxiliaire (17') dans la région d'un répartiteur (82), débouche dans le conduit (13) au niveau d'une seconde zone de canalisation (15") située en amont ; **par le fait qu'**un étranglement (83) est disposé dans le conduit entre le répartiteur (82) et la première zone de canalisation (15') située en amont ; **par le fait qu'**une pompe refouleuse (33) est logée dans le conduit d'amenée (12) ; et **par le fait que** ledit conduit d'amenée (12) et le conduit d'évacuation (14) peuvent être isolés au moyen d'une vanne (80, 81) respective.

8. Installation de filtration à écoulement transversal selon la revendication 3, **caractérisée par le fait qu'**un second conduit auxiliaire (17'), bifurquant du conduit auxiliaire (17') dans la région d'un répartiteur (82), débouche dans le conduit (13) au niveau d'une seconde zone de canalisation (15") située en amont; **par le fait qu'**une pompe refouleuse (33) est logée dans le conduit d'amenée (12) ; **par le fait que** ledit conduit d'amenée (12) peut être isolé au moyen d'une vanne (80) ; et **par le fait que** des sorties partielles (23) bifurquent du conduit (13), en vue de l'évacuation du fluide mélangé.

9. Installation de filtration à écoulement transversal selon l'une des revendications 3 à 8, **caractérisée par le fait qu'**un conduit collecteur (38) reliant les modules parallèles de filtration est raccordé, côté sortie, à une unité de filtration (36).

10. Installation de filtration à écoulement transversal selon la revendication 9, **caractérisée par le fait que** le conduit collecteur (38) est relié à un circuit secondaire (70) dans lequel une pompe refouleuse (71) est logée.

11. Installation de filtration à écoulement transversal selon la revendication 10, **caractérisée par le fait que** la direction de refoulement de la pompe refouleuse (71) correspond à celle de la pompe (46), de sorte que, dans les deux circuits, l'écoulement atteint en premier les modules de filtration occupant une position inférieure et, en dernier, les modules de filtration occupant une position supérieure.
